# EUROPÄISCHE PATENTSCHRIFT

(11) **EP 2 863 729 B1**
(45) Veröffentlichungstag und Bekanntmachung des Hinweises auf die Patenterteilung: **14.09.2016**
(21) Anmeldenummer: 13744532.6
(22) Anmeldetag: 31.07.2013
(51) Int. Cl.: A01D 41/14

(54) **SCHNEIDWERK**
CUTTING UNIT
MÉCANISME DE COUPE

(30) Priorität: 08.08.2012 DE 102012214079
(43) Veröffentlichungstag der Anmeldung: 29.04.2015
(73) Patentinhaber: Zürn Harvesting GmbH & Co. KG, 74214 Schöntal-Westernhausen (DE)
(72) Erfinder: ZÜRN, Rolf, 74214 Schöntal-Westernhausen (DE)
(74) Vertreter: Manitz, Finsterwald & Partner GbR
(86) Internationale Anmeldenummer: PCT/EP2013/066101
(87) Internationale Veröffentlichungsnummer: WO 2014/023632

(56) Entgegenhaltungen:
- EP-A1- 2 574 229
- EP-A2- 1 271 139
- WO-A1-2010/083849
- DE-A1- 2 411 153
- DE-A1- 2 654 141
- DE-A1- 3 407 812
- US-A1- 2005 081 498

## Beschreibung

Die vorliegende Erfindung betrifft ein Schneidwerk für eine Erntemaschine, insbesondere für einen Mähdrescher, mit einer Schneidmesseranordnung zum Mähen eines Ernteguts und einer Fördereinrichtung, welche das gemähte Erntegut von der Schneidmesseranordnung weg fördert, um dieses einer Verarbeitungseinrichtung, insbesondere einem Dreschwerk, zuzuführen.

Schneidwerke dieser Art werden bei der maschinellen Ernte von landwirtschaftlichen Nutzpflanzen, wie z.B. Getreide, Raps oder Sonnenblumen, eingesetzt. Für einen gleichmäßigen und kontinuierlichen Einzug der abgeschnittenen Nutzpflanzen in die Erntemaschine ist es wichtig, dass bestimmte Parameter des Schneidwerks, wie z.B. der Abstand zwischen den Schneidmesserklingen und der Fördereinrichtung, an die Art und den Zustand des gerade zu verarbeitenden Ernteguts angepasst sind. Beispielsweise sollte beim Ernten von relativ langstieligem Roggen ein anderer Abstand zwischen den Schneidmesserklingen und der Fördereinrichtung gewählt werden als beim Ernten von relativ kurzstieliger Gerste. Für eine effiziente Ernte von Raps ist ein besonders großer Abstand erforderlich. Durch ein Verstellen der Position der Schneidmesseranordnung relativ zu der Fördereinrichtung kann das Schneidwerk an verschiedene Erntesituationen angepasst werden. In ähnlicher Weise könnten z.B. die Drehgeschwindigkeit oder die Position einer Mähdrescher-Haspel, die Schnittgeschwindigkeit der Schneidmesserklingen oder andere Schneidwerksparameter zur Anpassung an das Erntegut einstellbar sein.

Hierfür muss üblicherweise der Bediener der zugehörigen Erntemaschine vor dem Beginn des Erntevorgangs die Art und den Zustand des Ernteguts beurteilen und darauf beruhend einen möglichst günstigen Wert für den jeweiligen Schneidwerksparameter wählen. Nach entsprechender Betätigung eines Bedienelements durch den Bediener kann dann die Anpassung erfolgen, indem z.B. eine hydraulische Verstellung der Schneidmesseranordnung ausgelöst wird.

Dieses Vorgehen birgt grundsätzlich das Risiko einer Fehleinschätzung, welche zu einer eingeschränkten Ernteleistung führen kann. Darüber hinaus ist es für den Fahrer einer Erntemaschine lästig, vor jedem Erntevorgang eine manuelle Einstellung am Schneidwerk vorzunehmen. Ein weiteres Problem besteht darin, dass sich die für die optimale Einstellung maßgeblichen Verhältnisse auch während des Erntens ändern können. Für den Fahrer ist es kaum möglich, auf jede derartige Veränderung zu reagieren.

Es kann eine Erfassungseinrichtung zum Ermitteln zumindest der Höhe des Ernteguts vor dem Mähen als einen Erntegutparameter vorgesehen sein. Mit "Höhe des Ernteguts" ist hier die Höhe des Erntegutbestandes über dem Boden gemeint. Schneidwerke mit solchen Erfassungseinrichtungen sind in der DE 24 11 153 und in der EP 1 271 139 A2 offenbart.

Die DE 34 07 812 A1 offenbart einen Mähdrescher mit einem stufenlos verstellbaren Schneidtisch.

In der US 2005/0081498 A1 ist eine Zuckerrohr-Erntemaschine offenbart, die eine Abtrennung der Zuckerrohrstängel mittels Laserstrahlen vorsieht.

Ein Höhensteuermechanismus auf optischer Basis oder auf Ultraschällbasis steuert hierbei die Abtrennhöhe.

Es ist eine Aufgabe der Erfindung, ein Schneidwerk der genannten Art hinsichtlich der Ernteleistung und der Bedienbarkeit zu verbessern.

Die Lösung der Aufgabe erfolgt durch ein Schneidwerk mit den Merkmalen des Anspruchs 1.

Erfindungsgemäß ist die Position der Schneidmesseranordnung relativ zu der Fördereinrichtung mittels einer Stellvorrichtung verstellbar, wobei eine mit der Erfassungseinrichtung und mit der Stellvorrichtung in Verbindung stehende Steuereinrichtung dazu ausgebildet ist, in Abhängigkeit von der ermittelten Höhe des Ernteguts die Position der Schneidmesseranordnung relativ zu der Fördereinrichtung zu verstellen. Die Steuereinrichtung kann dafür sorgen, dass der Abstand zwischen der Schneidmesseranordnung und der Fördereinrichtung automatisch an das aktuelle Erntegut angepasst wird. Aufgrund der objektiven Ermittlung des Erntegutparameters mittels der Erfassungseinrichtung sind Fehleinschätzungen, wie sie bei der Begutachtung durch einen Bediener auftreten können, ausgeschlossen. Darüber hinaus ist der Fahrer der Erntemaschine von der lästigen Aufgabe befreit, vor jedem Erntevorgang oder sogar während des Erntens das Erntegut zu beurteilen, also zum Beispiel dessen Länge zu schätzen, und das Schneidwerk entsprechend einzustellen. Die Verstellung der Position der Schneidmesseranordnung relativ zu der Fördereinrichtung in Abhängigkeit von der ermittelten Höhe des Ernteguts trägt dem Umstand Rechnung, dass die optimale Schneidwerkstischlänge davon abhängt, ob das Erntegut eher steht oder eher liegt. Beispielsweise kann es günstig sein, bei langem, aber weitgehend liegendem Erntegut einen relativ kurzen Abstand zwischen Schneidmesseranordnung und Fördereinrichtung zu wählen, obwohl aufgrund der Länge des Ernteguts an sich eher ein längerer Abstand zu wählen wäre.

Weiterbildungen der Erfindung sind in den abhängigen Ansprüchen, der Beschreibung sowie der beigefügten Zeichnung angegeben.

Vorzugsweise ist die Steuereinrichtung dazu ausgebildet, die Position der Schneidmesseranordnung relativ zu der Fördereinrichtung während des Betriebs des Schneidwerks nachzustellen. Hierdurch kann die Ernteleistung beträchtlich gesteigert werden, da auch bei einer Änderung des Ern- ' tegutparameters während des Erntevorgangs eine optimale Schneidwerkseinstellung gewährleistet ist. Das Nachstellen kann beispielsweise fortlaufend erfolgen. Um den Steueraufwand zu verringern, kann es aber auch vorgesehen sein, die Position der Schneidmesseranordnung relativ zu der Fördereinrichtung lediglich in bestimmten, z.B. regelmäßigen, Zeitabständen nachzustellen. Ebenso ist es möglich, das Nachstellen bedarfsweise durchzuführen, also die Position der Schneidmesseranordnung relativ zu der Fördereinrichtung lediglich dann nachzustellen, wenn die Änderung des Erntegutparameters einen vorgegebenen Schwellwert übersteigt.

Gemäß einer Ausführungsform der Erfindung ist die Stellvorrichtung dazu ausgebildet, die Position der Schneidmesseranordnung und/oder der Fördereinrichtung in und entgegen einer Ernterichtung der Erntemaschine zu verstellen. Für optimale Ernteergebnisse ist es nämlich entscheidend, dass der horizontale Abstand zwischen der Schneidmesseranordnung und der Fördereinrichtung zu dem aktuellen Erntegut passt.

Vorzugsweise ist die Stellvorrichtung dazu ausgebildet, die Schneidmesseranordnung relativ zu einem Grundrahmen des Schneidwerks zu verstellen. Mit anderen Worten ist es bevorzugt, die Fördereinrichtung, beispielsweise eine Einzugsschnecke oder eine Anordnung aus quer zur Ernterichtung fördernden Förderbändern, ortsfest zu lassen und lediglich die Schneidmesseranordnung zu bewegen, z.B. mittels eines hydraulischen oder elektromotorischen Stellantriebs. Dies ist konstruktiv einfacher zu bewerkstelligen als eine aktive Bewegung der Fördereinrichtung. Falls es die Anwendung erfordern sollte, könnte die Stellvorrichtung jedoch auch dazu ausgebildet sein, die Fördereinrichtung relativ zu dem Grundrahmen des Schneidwerks zu verstellen. Beispielsweise könnte auf diese Weise die Position der Einzugsschnecke in vertikaler Richtung verstellt werden. Ebenso könnten bei dem Verstellvorgang sowohl die Schneidmesseranordnung als auch die Fördereinrichtung relativ zum Grundrahmen des Schneidwerks bewegt werden.

Gemäß einer weiteren Ausführungsform der Erfindung ist eine sich zwischen der Schneidmesseranordnung und der Fördereinrichtung erstreckende Auflagefläche für das Erntegut vorgesehen, wobei die Stellvorrichtung dazu ausgebildet ist, die Ausdehnung der Auflagefläche an den aktuellen Abstand zwischen der Schneidmesseranordnung und der Fördereinrichtung anzupassen. Eine derartige Auflagefläche wird auf dem Fachgebiet auch als "Schneidwerksboden" oder "Schneidwerkstisch" bezeichnet. Zum Erzielen optimaler Ernteergebnisse ist es wichtig, dass die Länge dieses Schneidwerkstisches an die Länge oder die Höhe des Ernteguts angepasst ist.

Die Fördereinrichtung kann weiterhin eine um eine quer zur Ernterichtung der Erntemaschine verlaufende Rotationsachse drehbare Einzugsschnecke umfassen, wobei die Stellvorrichtung dazu ausgebildet ist, in Abhängigkeit von dem ermittelten Erntegutparameter die Position der Schneidmesseranordnung relativ zu der Einzugsschnecke zu verstellen. Für einen kontinuierlichen Einzug des Ernteguts ist es entscheidend, dass der Abstand zwischen den Klingen der Schneidmesseranordnung und der Stelle des ersten Eingriffs der Förderanlage auf die Eigenschaften des Ernteguts abgestimmt ist.

Eine alternative Ausführungsform der Erfindung sieht vor, dass die Fördereinrichtung wenigstens einen quer zur Ernterichtung der Erntemaschine fördernden Bandförderer umfasst, wobei die Stellvorrichtung dazu ausgebildet ist, in Abhängigkeit von dem ermittelten Erntegutparameter die Position der Schneidmesseranordnung relativ zu dem Bandförderer zu verstellen.

Die Steuereinrichtung kann zusätzlich dazu ausgebildet sein, in Abhängigkeit von dem ermittelten Erntegutparameter eine Schnittgeschwindigkeit der Schneidmesseranordnung und/oder eine Fördergeschwindigkeit der Fördereinrichtung zu verstellen.

Das Schneidwerk kann auch eine drehbar angetriebene Haspel umfassen, wobei die Steuereinrichtung dazu ausgebildet ist, in Abhängigkeit von dem ermittelten Erntegutparameter eine Rotationsgeschwindigkeit der Haspel und/oder eine Position der Haspel relativ zu einem Grundrahmen des Schneidwerks zu verstellen.

Weiterhin kann die Erfassungseinrichtung dazu ausgebildet sein, als weiteren Erntegutparameter die Länge des Ernteguts zu ermitteln. Die Länge des Ernteguts ist ein maßgebliches Kriterium bei der Festlegung der optimalen Schneidwerkstischlänge. Die Steuereinrichtung kann bei Bedarf sowohl die Länge als auch die Höhe des Ernteguts sowie gegebenenfalls weitere Erntegutparameter berücksichtigen und daraus z.B. mittels eines Algorithmus die optimale Schneidwerkseinstellung errechnen. Ebenso kann die Steuereinrichtung dazu ausgebildet sein, gleichzeitig oder nacheinander mehrere Schneidwerksparameter zu verstellen.

Bevorzugt arbeitet die Erfassungseinrichtung berührungslos, insbesondere auf optischer Basis oder auf Ultraschallbasis. Somit wird das Erntegut von der Erfassungseinrichtung nicht beeinträchtigt. Gemäß einer speziellen Ausführungsform umfasst die Erfassungseinrichtung ein Bilderfassungssystem, insbesondere eine Kamera. Anhand eines Bilderfassungssystems lassen sich in vielfältiger Weise Erntegutparameter bestimmen.

Alternativ oder zusätzlich kann die Erfassungseinrichtung auch einen Lichttaster, eine Lichtschranke oder einen Laserscanner umfassen.

Die Erfindung betrifft auch eine Erntemaschine, insbesondere einen Mähdrescher, welcher ein Schneidwerk wie vorstehend beschrieben aufweist.

Die Erfindung wird nachfolgend beispielhaft unter Bezugnahme auf die Zeichnung beschrieben.

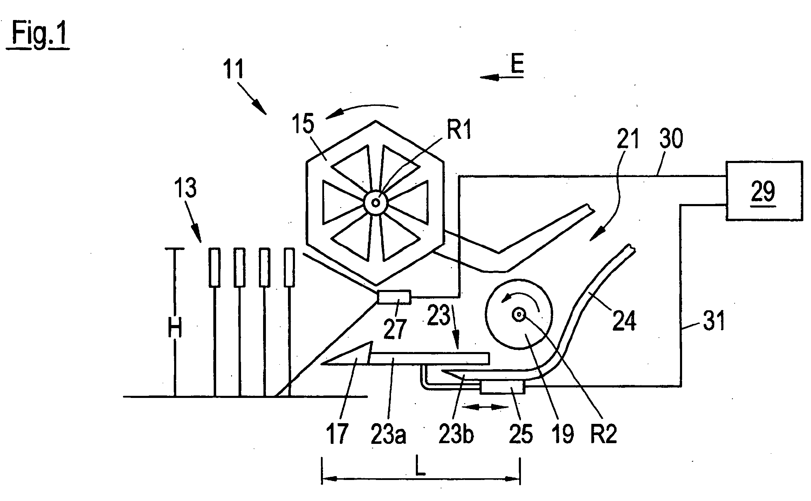

- Fig. 1: zeigt eine vereinfachte, teilweise aufgeschnittene Seitenansicht eines erfindungsgemäßen Schneidwerks.

In Fig. 1 ist in vereinfachter Form ein Schneidwerk 11 für einen nicht dargestellten Mähdrescher gezeigt, welcher dazu ausgebildet ist, Nutzpflanzen 13, wie z.B. Roggen, Weizen, Gerste oder Raps, entlang einer Ernterichtung E zu mähen und nachfolgend einem Dreschvorgang zu unterziehen. Das Schneidwerk 11 umfasst in an sich bekannter Weise eine Haspel 15, welche um eine quer zu der Ernterichtung E verlaufende erste Rotationsachse R1 drehbar angetrieben ist, sowie eine unterhalb der Haspel 15 angeordnete Schneidmesseranordnung in Form eines quer zu der Ernterichtung E angeordneten Messerbalkens 17. In einem Abstand L hinter dem Messerbalken 17 ist eine Einzugsschnecke 19 angeordnet, welche um eine parallel zu der ersten Rotationsachse R1 verlaufende zweite Rotationsachse R2 drehbar angetrieben ist. Die Einzugsschnecke 19 dient dazu, die abgemähten Getreidepflanzen 13 in einen Einzugsschacht 21 zu fördern, von welchem aus unter Verwendung weiterer, nicht dargestellter Fördermittel die Zuführung des Ernteguts in das Innere des Mähdreschers und zu dem entsprechenden Dreschwerk erfolgt.

Zwischen dem Messerbalken 17 und der Einzugsschnecke 19 erstreckt sich eine Auflage für die abgemähten Getreidepflanzen 13 in Form eines Schneidwerkstischs 23, welcher in ein vorderes Tischteil 23a und ein hinteres Tischteil 23b geteilt ist. Das hintere Tischteil 23b ist dabei ebenso wie die Einzugsschnecke 19 fest an einem Grundrahmen 24 des Schneidwerks 11 angebracht. Mittels einer hydraulischen Stellvorrichtung 25 kann das vordere Tischteil 23a relativ zu dem hinteren Tischteil 23b in und entgegen der Ernterichtung E bewegt werden, um so die Schneidwerkstischlänge L zu verändern.

Ein optoelektronischer Sensor 27, z.B. eine Kamera, ist an dem Schneidwerk 11 angebracht und dient dazu, die Bestandshöhe H, d.h. die Höhe der Getreidepflanzen 13 vor dem Mähen, zu erfassen. Der optoelektronische Sensor 27 gibt über eine entsprechende Signalleitung 30 ein entsprechendes Signal an eine elektronische Steuereinrichtung 29 aus, welche an dem Schneidwerk 11 oder im Inneren des zugehörigen Mähdreschers angeordnet ist. Aus der durch den optoelektronischen Sensor 27 erfassten Bestandshöhe H bestimmt die Steuereinrichtung 29 unter Verwendung eines vorgegebenen Algorithmus die für diese Bestandshöhe H hinsichtlich der Ernteleistung optimale Schneidwerkstischlänge L. Die Steuereinrichtung 29 gibt dann über eine Steuerleitung 31 ein entsprechendes Signal an die hydraulische Stellvorrichtung 25 aus, welche daraufhin die Position des vorderen Tischteils 23a gemäß der ermittelten optimalen Schneidwerkstischlänge L einstellt. Auf diese Weise wird während des Erntevorgangs die Schneidwerkstischlänge L fortwährend an die Bestandshöhe H angepasst, so dass auch bei einer Änderung der Bestandshöhe H keine Probleme beim Einzug der Getreidepflanzen 13 auftreten und so stets eine maximale Ernteleistung gewährleistet ist. Der Fahrer des Mähdreschers muss sich mit Fragen der Schneidwerkstischanpassung nicht befassen, da die Einstellung der Schneidwerkstischlänge L vollautomatisch erfolgt.

Die elektronische Steuereinrichtung 29 kann bei Bedarf auch weitere Erntegutparameter berücksichtigen und sogar komplexen Zusammenhängen zwischen den einzelnen Erntegutparametern Rechnung tragen. Beispielsweise kann die Steuereinrichtung 29 zwischen stehendem Getreide und liegendem Getreide unterscheiden. Weiterhin kann die elektronische Steuereinrichtung 29 auch die Verstellung weiterer Schneidwerksparameter veranlassen, z.B. eine Anpassung der Drehgeschwindigkeit und/oder der Position der Haspel 15, der Drehgeschwindigkeit der Einzugsschnecke 19 oder der Schnittgeschwindigkeit des Messerbalkens 17.

Die Erfindung wurde lediglich beispielhaft anhand eines Mähdrescher-Schneidwerks beschrieben. Das automatische Verstellen eines Schneidwerksparameters wie z.B. der Position des Messerbalkens 17 relativ zu der Einzugsschnecke 19 bringt jedoch auch bei anderen Schneidwerken Vorteile, beispielsweise bei Schneidwerken für Feldhäcksler oder für Schwadmäher.

Dadurch dass die Einstellung der Schneidwerkstischlänge L gewisserma-ßen "online" erfolgt, ist eine einfache und bequeme Bedienung einer Erntemaschine sowie eine Optimierung der durchschnittlichen Ernteleistung möglich.

### Bezugszeichenliste

- 11: Schneidwerk
- 13: Getreidepflanze
- 15: Haspel
- 17: Messerbalken
- 19: Einzugsschnecke
- 21: Einzugsschacht
- 23: Schneidwerkstisch
- 23a: vorderes Tischteil
- 23b: hinteres Tischteil
- 24: Grundrahmen
- 25: Stellvorrichtung
- 27: optoelektronischer Sensor
- 29: Steuereinrichtung
- 30: Signalleitung
- 31: Steuerleitung

- E: Ernterichtung
- R1: erste Rotationsachse
- R2: zweite Rotationsachse
- L: Schneidwerkstischlänge
- H: Bestandshöhe

## Patentansprüche

1. Schneidwerk (11) für eine Erntemaschine, insbesondere für einen Mähdrescher, mit
einer Schneidmesseranordnung (17) zum Mähen eines Ernteguts (13) und
einer Fördereinrichtung (19), welche das gemähte Erntegut (13) von der Schneidmesseranordnung (17) weg fördert, um dieses einer Verarbeitungseinrichtung, insbesondere einem Dreschwerk, zuzuführen, wobei
eine Erfassungseinrichtung (27) zum Ermitteln zumindest der Höhe (H) des Ernteguts vor dem Mähen als einen Erntegutparameter vorgesehen ist,
**dadurch gekennzeichnet, dass**
die Position der Schneidmesseranordnung (17) relativ zu der Fördereinrichtung (19) mittels einer Stellvorrichtung (25) verstellbar ist, wobei eine mit der Erfassungseinrichtung (27) und mit der Stellvorrichtung (25) in Verbindung stehende Steuereinrichtung (29) dazu ausgebildet ist, in Abhängigkeit von der ermittelten Höhe (H) des Ernteguts die Position der Schneidmesseranordnung (17) relativ zu der Fördereinrichtung (19) zu verstellen.

2. Schneidwerk nach Anspruch 1,
**dadurch gekennzeichnet, dass** die Steuereinrichtung (29) dazu ausgebildet ist, die Position der Schneidmesseranordnung (17) relativ zu der Fördereinrichtung (19) während des Betriebs des Schneidwerks (11) nachzustellen.

3. Schneidwerk nach Anspruch 1 oder 2,
**dadurch gekennzeichnet, dass**
die Stellvorrichtung (25) dazu ausgebildet ist, die Position der Schneidmesseranordnung (17) und/oder der Fördereinrichtung (19) in und entgegen einer Ernterichtung (E) der Erntemaschine zu verstellen.

4. Schneidwerk nach einem der vorstehenden Ansprüche,
**dadurch gekennzeichnet, dass**
eine sich zwischen der Schneidmesseranordnung (17) und der Fördereinrichtung (19) erstreckende Auflagefläche (23) für das Erntegut (13) vorgesehen ist, wobei die Stellvorrichtung (25) dazu ausgebildet ist, die Ausdehnung der Auflagefläche (23) an den aktuellen Abstand zwischen der Schneidmesseranordnung (17) und der Fördereinrichtung (19) anzupassen.

5. Schneidwerk nach einem der vorstehenden Ansprüche,
**dadurch gekennzeichnet, dass**
die Fördereinrichtung (19) eine um eine quer zur Ernterichtung (E) der Erntemaschine verlaufende Rotationsachse (R2) drehbare Einzugsschnecke umfasst, wobei die Stellvorrichtung (25) dazu ausgebildet ist, in Abhängigkeit von dem ermittelten Erntegutparameter (H) die Position der Schneidmesseranordnung (17) relativ zu der Einzugsschnecke (19) zu verstellen.

6. Schneidwerk nach einem der vorstehenden Ansprüche,
**dadurch gekennzeichnet, dass**
die Fördereinrichtung wenigstens einen quer zur Ernterichtung (E) der Erntemaschine fördernden Bandförderer umfasst, wobei die Stellvorrichtung dazu ausgebildet ist, in Abhängigkeit von dem ermittelten Erntegutparameter (H) die Position der Schneidmesseranordnung (17) relativ zu dem Bandförderer zu verstellen.

7. Schneidwerk nach zumindest einem der vorstehenden Ansprüche, **dadurch gekennzeichnet, dass**
die Steuereinrichtung (29) dazu ausgebildet ist, in Abhängigkeit von dem ermittelten Erntegutparameter (H) eine Schnittgeschwindigkeit der Schneidmesseranordnung (17) und/oder eine Fördergeschwindigkeit der Fördereinrichtung (19) zu verstellen.

8. Schneidwerk nach zumindest einem der vorstehenden Ansprüche, **dadurch gekennzeichnet, dass**
das Schneidwerk (11) eine drehbar angetriebene Haspel (15) umfasst, wobei die Steuereinrichtung (29) dazu ausgebildet ist, in Abhängigkeit von dem ermittelten Erntegutparameter (H) eine Rotationsgeschwindigkeit der Haspel (15) und/oder eine Position der Haspel (15) relativ zu einem Grundrahmen (24) des Schneidwerks zu verstellen.

9. Schneidwerk nach zumindest einem der vorstehenden Ansprüche, **dadurch gekennzeichnet, dass**
die Erfassungseinrichtung (27) dazu ausgebildet ist, als weiteren Erntegutparameter die Länge des Ernteguts zu ermitteln.

10. Schneidwerk nach zumindest einem der vorstehenden Ansprüche, **dadurch gekennzeichnet, dass**
die Erfassungseinrichtung (27) berührungslos arbeitet, insbesondere auf optischer Basis oder auf Ultraschallbasis.

11. Schneidwerk nach Anspruch 10,
**dadurch gekennzeichnet, dass**
die Erfassungseinrichtung (27) ein Bilderfassungssystem, insbesondere eine Kamera, umfasst.

12. Erntemaschine, insbesondere Mähdrescher,
welche ein Schneidwerk (11) gemäß einem der vorstehenden Ansprüche aufweist.

## Claims

1. A cutting unit (11) for a harvester, in particular for a combine harvester, having
a cutting blade arrangement (17) for reaping a crop (13); and
a conveying device (19) which conveys the reaped crop (13) away from the cutting blade arrangement (17) to supply it to a processing device, in particular to a threshing unit, wherein
a detection device (27) is provided for determining at least the height (H) of the crop prior to reaping as a crop parameter,
**characterized in that**
the position of the cutting blade arrangement (17) is adjustable relative to the conveying device (19) by means of an adjustment apparatus (25),
with a control device (29) connected to the detection device (27) and to the adjustment apparatus (25) being configured to adjust the position of the cutting blade arrangement (17) relative to the conveying device (19) in dependence on the determined height (H) of the crop.

2. A cutting unit in accordance with claim 1,
**characterized in that**
the control device (29) is configured to readjust the position of the cutting blade arrangement (17) relative to the conveying device (19) during the operation of the cutting unit (11).

3. A cutting unit in accordance with claim 1 or claim 2,
**characterized in that**
the adjustment apparatus (25) is configured to adjust the position of the cutting blade arrangement (17) and/or of the conveying device (19) in and against a harvesting direction (E) of the harvester.

4. A cutting unit in accordance with any one of the preceding claims, **characterized in that**
a support surface (23) for the crop (13) is provided which extends between the cutting blade arrangement (17) and the conveying device (19), with the adjustment apparatus (25) being configured to adapt the extent of the support surface (23) to the current spacing between the cutting blade arrangement (17) and the conveying device (19).

5. A cutting unit in accordance with any one of the preceding claims, **characterized in that**
the conveying device (19) comprises an intake auger rotatable about a rotational axis (R2) extending transversely to the harvesting direction (E) of the harvester, with the adjustment apparatus (25) being configured to adjust the position of the cutting blade arrangement (17) relative to the intake auger (19) in dependence on the determined crop parameter (H).

6. A cutting unit in accordance with any one of the preceding claims, **characterized in that**
the conveying device comprises at least one belt conveyer conveying transversely to the harvesting direction (E) of the harvester, with the adjustment apparatus being configured to adjust the position of the cutting blade arrangement (17) relative to the belt conveyor in dependence on the determined crop parameter (H).

7. A cutting unit in accordance with at least one of the preceding
claims,
**characterized in that**
the control device (29) is configured to adjust a cutting speed of the cutting blade arrangement (17) and/or a conveying speed of the conveying device (19) in dependence on the determined crop parameter (H).

8. A cutting unit in accordance with at least one of the preceding
claims,
**characterized in that**
the cutting unit (11) comprises a rotatably driven reel (15), with the control device (29) being configured to adjust a rotational speed of the reel (15) and/or a position of the reel (15) relative to a base frame (24) of the cutting unit in dependence on the determined crop parameter (H).

9. A cutting unit in accordance with at least one of the preceding
claims,
**characterized in that**
the detection device (27) is configured to determine the length of the crop as a further crop parameter.

10. A cutting unit in accordance with at least one of the preceding
claims,
**characterized in that**
the detection device (27) works in a contactless manner, in particular on an optical basis or on an ultrasound basis.

11. A cutting unit in accordance with claim 10,
**characterized in that**
the detection device (27) comprises an image detection system, in particular a camera.

12. A harvester, in particular a combine harvester,
which has a cutting unit (11) in accordance with any one of the preceding claims.

## Revendications

1. Mécanisme de coupe (11) pour une machine de récolte, en particulier pour une moissonneuse-batteuse, comprenant
un agencement de couteau de coupe (17) pour moissonner une plante à récolter (13), et
un moyen de convoyage (19) qui convoie la plante à récolter moissonnée (13) en éloignement de l'agencement de couteau de coupe (17), afin d'amener celle-ci à un dispositif de traitement, en particulier un mécanisme de battage, dans lequel
il est prévu un moyen de détection (27) pour déterminer au moins la hauteur (H) de la plante à récolter avant le moissonnage, à titre de paramètre de plante à récolter,
**caractérisé en ce que**
la position de l'agencement de couteau de coupe (17) par rapport au moyen de convoyage (19) est réglable au moyen d'un dispositif de positionnement (25), dans lequel un dispositif de commande (29) qui communique avec le moyen de détection (27) et avec le dispositif de positionnement (25) est réalisé dans le but de régler la position de l'agencement de couteau de coupe (17) par rapport au moyen de convoyage (19) en fonction de la hauteur déterminée (H) de la plante à récolter.

2. Mécanisme de coupe selon la revendication 1,
**caractérisé en ce que** le dispositif de commande (29) est réalisé pour réajuster la position de l'agencement de couteau de coupe (17) par rapport au moyen de convoyage (19) pendant le fonctionnement du mécanisme de coupe (11).

3. Mécanisme de coupe selon la revendication 1 ou 2,
**caractérisé en ce que** le dispositif de positionnement (25) est réalisé pour régler la position de l'agencement de couteau de coupe (17) et/ou du moyen de convoyage (19) dans une direction de récolte (E) de la machine de récolte et en sens contraire.

4. Mécanisme de coupe selon l'une des revendications précédentes, **caractérisé en ce qu'**il est prévu une surface de pose (23) pour la plante à récolter (13), s'étendant entre l'agencement de couteau de coupe (17) et le moyen de convoyage (19), dans lequel le dispositif de positionnement (25) est réalisé pour adapter l'extension de la surface de pose (23) à la distance actuelle entre l'agencement de couteau de coupe (17) et le moyen de convoyage (19).

5. Mécanisme de coupe selon l'une des revendications précédentes, **caractérisé en ce que** le moyen de convoyage (19) inclut une vis d'Archimède d'introduction, en rotation autour d'un axe de rotation (R2) s'étendant transversalement à la direction de récolte (E) de la machine de récolte, dans lequel le dispositif de positionnement (25) est réalisé pour régler la position de l'agencement de couteau de coupe (17) par rapport à la vis d'Archimède d'introduction (19) en fonction du paramètre déterminé (H) pour la plante à récolter.

6. Mécanisme de coupe selon l'une des revendications précédentes, **caractérisé en ce que** le moyen de convoyage inclut au moins un convoyeur à bande qui convoie transversalement à la direction de récolte (E) de la machine de récolte, dans lequel le dispositif de positionnement est réalisé pour régler la position de l'agencement de couteau de coupe (17) par rapport au convoyeur à bande en fonction du paramètre déterminé (H) de la plante à récolter.

7. Mécanisme de coupe selon l'une au moins des revendications précédentes,
**caractérisé en ce que** le dispositif de commande (29) est réalisé pour régler une vitesse de coupe de l'agencement de couteau de coupe (17) et/ou une vitesse de convoyage du moyen de convoyage (19) en fonction du paramètre déterminé (H) de la plante à récolter.

8. Mécanisme de coupe selon l'une au moins des revendications précédentes,
**caractérisé en ce que** le mécanisme de coupe inclut un enrouleur (15) entraîné en rotation, et le dispositif de commande (29) est réalisé pour régler une vitesse de rotation de l'enrouleur (15) et/ou une position de l'enrouleur (15) par rapport à un châssis de base (24) du mécanisme de coupe en fonction du paramètre déterminé (H) de la plante à récolter.

9. Mécanisme de coupe selon l'une au moins des revendications précédentes,
**caractérisé en ce que** le moyen de détection (27) est réalisé pour déterminer, à titre d'autre paramètre de la plante à récolter, la longueur de la plante à récolter.

10. Mécanisme de coupe selon l'une au moins des revendications précédentes, **caractérisé en ce que** le moyen de détection (17) fonctionne sans contact, en particulier à base optique ou à base d'ultrasons.

11. Mécanisme de coupe selon la revendication 10,
**caractérisé en ce que** le moyen de détection (27) inclut un système d'imagerie, en particulier une caméra.

12. Machine de récolte, en particulier moissonneuse-batteuse, qui comprend un mécanisme de coupe (11) selon l'une des revendications précédentes.
